# EUROPÄISCHE PATENTSCHRIFT

(11) **EP 2 800 962 B1**
(45) Veröffentlichungstag und Bekanntmachung des Hinweises auf die Patenterteilung: **14.02.2024**
(21) Anmeldenummer: 12816680.8
(22) Anmeldetag: 28.12.2012
(51) Int. Cl.: G01M 3/38, G01M 3/32

(54) **VERFAHREN ZUR LECKSUCHE AN EINEM NICHT FORMSTARREN PRÜFLING**
METHOD FOR DETECTING A LEAK ON A NON-RIGID TEST SPECIMEN
PROCÉDÉ DE RECHERCHE DE FUITE SUR UN OBJET À TESTER DE FORME VARIABLE

(30) Priorität: 03.01.2012 DE 102012200063
(43) Veröffentlichungstag der Anmeldung: 12.11.2014
(73) Patentinhaber: Inficon GmbH, 50968 Köln (DE)
(72) Erfinder: WETZIG, Daniel, 50999 Köln (DE); DECKER, Silvio, 50999 Köln (DE)
(74) Vertreter: dompatent von Kreisler Selting Werner - Partnerschaft von Patent- und Rechtsanwälten mbB
(86) Internationale Anmeldenummer: PCT/EP2012/077079
(87) Internationale Veröffentlichungsnummer: WO 2013/102610

(56) Entgegenhaltungen:
- EP-A1- 0 741 288
- AU-B2- 603 419
- DE-A1-102006 015 254
- US-A- 4 899 574
- US-A1- 2004 134 259
- US-A1- 2008 127 716
- US-B1- 6 354 142

## Beschreibung

Die Erfindung betrifft ein Verfahren zur Lecksuche an einem nicht formstarren Prüfling.

Nicht formstarre Prüflinge weisen eine flexible Struktur auf, die bei Druckänderungen nachgibt. Derartige Prüflinge sind beispielsweise Lebensmittelverpackungen. Bei zu großen Druckunterschieden zwischen dem Innendruck des Prüflings und dessen Umgebungsdruck besteht die Gefahr, dass der Prüfling platzt oder zumindest beschädigt wird.

Herkömmlicherweise werden nicht formstarre Prüflinge mit einem Prüfgas gefüllt und das Prüfgas im Abgasstrom des Pumpsystems, das zur Herstellung der erforderlichen Druckdifferenzen verwendet wird, gemessen. Alternativ kann die Verwendung eines bestimmten Prüfgases entfallen, wenn der Sensor an das Füllgas innerhalb des Prüflings angepasst ist. Bei diesem Messverfahren können Einflüsse des Umgebungsgases das Messergebnis verfälschen.

In US 4,862,732 wird beschrieben, die Leckrate eines Lecks an einem druckbeaufschlagten flexiblen Behälter durch Erhöhen des Behälterinnendrucks zu bestimmen. Hierbei besteht das Risiko, dass der Prüfling bei zu hohem Druck platzt oder beschädigt wird.

In US 5,767,392 wird beschrieben, ein Leck in einem flexiblen Behälter zu erkennen, in dem der Behälter durch eine von außen aufgebrachte Kraftwirkung komprimiert wird und das Verhalten der Behälterwand nach Entfernen des Drucks von außen beobachtet wird. Auch bei diesem Verfahren ist der aufbringbare Druck begrenzt und der Behälter kann bei einem zu hohen Druck beschädigt werden oder platzen.

In US 6,955,076 wird beschrieben, ein Leck eines Prüflings in einer Folienkammer unter Verwendung eines Prüfgases zu detektieren. Es wird beschrieben, die Schließbarkeit und die Dichtheit der Folienkammer zu verbessern, indem in der Randzone der Folienkammer ein von der Testkammer unabhängiges Volumen evakuiert wird. Dadurch wird erreicht, dass kein Gas aus der Umgebung der Folienkammer durch Undichtigkeiten im Schließbereich der Kammer in das Testkammervolumen gelangt und das Messergebnis verfälscht.

US 6,354,142 B1 beschreibt ein Lecksuchverfahren unter Verwendung einer Folienkammer zur Detektion eines Lecks in einem mit Helium befüllten Prüfling.

DE 10 2006 015 254 A1 beschreibt eine Vorrichtung zur Messung der Dichtigkeit hermetisch abgeschlossener Gegenstände, zum Beispiel Verpackungen mit mindestens einer Prüfkammer in welcher ein berührungsloser, mit elektromagnetischer Strahlung arbeitender Abstandsmesssensor angeordnet ist. AU 603419 B2 beschreibt eine Lecksuchanordnung, bei der die Änderung einer Kapazität gemessen wird.

US 2008/127716 A1 beschreibt ein Verfahren zur Prüfung flexibler Verpackungen auf Lecks. Das Verfahren umfasst die Schritte des Einbringens der flexiblen Verpackung in eine abdichtbare Prüfkammer; des Reduzierens des Gasdrucks in der Kammer; des Messens einer der Verpackung zugeordneten Referenzabmessung über einen vorbestimmten Zeitraum und des Erfassens jeglicher Änderungen der Abmessung der Verpackung als Indikator für ein Austreten von Fluid aus der Verpackung. In einer Ausführungsform umfasst die obere Wand der Prüfkammer eine einzelne flexible Membran. Das Patent offenbart nicht, dass die Prüfkammer aus mehreren flexiblen Wänden besteht.

Der Erfindung liegt die Aufgabe zugrunde, ein vereinfachtes Verfahren zur Lecksuche an einem nicht formstarren Prüfling zu schaffen.

Das erfindungsgemäße Verfahren ist definiert durch Patentanspruch 1.

Zunächst wird der formstarre Prüfling in verschlossenem Zustand in eine Folienkammer eingebracht. Bei einer Folienkammer handelt es sich um eine Prüfkammer mit flexiblen Wandbereichen, die ihre Form in Abhängigkeit von der Differenz zwischen dem Druck innerhalb der Folienkammer und dem Umgebungsdruck verändern. Nach Einbringen des Prüflings in die Folienkammer wird die Folienkammer verschlossen und der Druck innerhalb der Folienkammer im Bereich außerhalb des Prüflings abgesenkt. Dabei schmiegen sich die flexiblen Wände der Folienkammer an den Prüfling an. Die Folie der Folienkammer berührt dann den Prüfling von außen. Die Detektion eines Lecks im Prüfling erfolgt dann durch Beobachtung der Folie der Folienkammer, wobei eine räumliche Veränderung der an den Prüfling angeschmiegten Folie als Hinweis auf ein Leck im Prüfling angesehen wird. Die bei Absenken des Drucks innerhalb der Folienkammer an den Prüfling angeschmiegte Folie stützt den nicht formstarren Prüfling von außen und verhindert ein Platzen des Prüflings.

Ein besonderer Vorteil des erfindungsgemäßen Verfahrens besteht darin, dass bei einer Messung der Positionsänderung der Folie oder einer Volumenänderung der Folienkammer keine besondere Anforderung an die Dichtheit der Folienkammer zu stellen ist. Während bei den herkömmlichen Verfahren zur Messung des Druckanstiegs innerhalb der Folienkammer oder zur Dichtheitsprüfung unter Verwendung von Prüfgas in der Folienkammer die Dichtheit der Folienkammer das Messergebnis erheblich beeinflusst, ist die Dichtheit der Folienkammer für das erfindungsgemäße Verfahren von vernachlässigbarer Bedeutung. Es ist lediglich eine solche Dichtheit der Folienkammer zu erzielen, die das gewünschte Absenken des Drucks innerhalb der Folienkammer ermöglicht. Ein Absenken des Drucks innerhalb einer undichten Folienkammer kann auch durch Verwenden einer Pumpe mit entsprechend erhöhtem Saugvermögen erreicht werden. So ist es insbesondere ausreichend, bei der Folienkammer lediglich eine solche Dichtheit zu erzielen, die gleich oder geringer ist als die Dichtheit des zu testenden Prüflings. Die Leckrate der Folienkammer kann genauso groß oder mindestens doppelt so groß wie die Leckrate des Prüflings sein.

Die Messung der räumlichen Veränderung kann durch laseroptische Messung der Position der Folienoberfläche, beispielsweise durch Änderung der Ablenkung eines auf die Folienoberfläche gerichteten Lasers, erfolgen. Im Falle einer metallisierten Folienoberfläche kann die Messung durch Messen der Kapazitätsänderung erfolgen. Alternativ kann auch eine Vorrichtung eingesetzt werden, die eine Berührung oder das Ausbleiben einer Berührung mit der Folienoberfläche anzeigt. Beispielsweise kann ein Kontaktstift oder ein Kontaktprüfer mechanisch die Positionsänderung der Folienoberfläche erfassen.

Vorzugsweise erfolgt erfindungsgemäß nicht nur lediglich die Detektion eines Lecks, sondern auch ein Bestimmen der Leckrate des durch ein Leck hindurchtretenden Gases. Hierbei wird die Leckrate in Abhängigkeit von der gemessenen räumlichen Veränderung der Folie berechnet. Dabei wird der Grundsatz angewendet, dass die Änderung der Folienposition umso größer ist je größer das Leck ist.

Vorzugsweise wird bei der Anwendung des erfindungsgemäßen Verfahrens der Druck in der Folienkammer auf einen Druck reduziert, der um mindestens 500 mbar und vorzugsweise um mindestens 950 mbar geringer ist als der Druck in dem Prüfling. Folglich resultiert eine Druckdifferenz zwischen dem Folienkammerinnendruck außerhalb des Prüflings und dem Innendruck des Prüflings von mindestens 500 mbar und vorzugsweise mindestens 950 mbar. Derart große Druckdifferenzen können ohne Zerstörung oder Beschädigung des Prüflings dadurch erzeugt werden, dass sich die Folie der Folienkammer an den Prüfling anschmiegt und diesen stützt.

Bei der Reduzierung des Drucks innerhalb der Folienkammer kann der atmosphärische Druck innerhalb des Prüflings beibehalten werden.

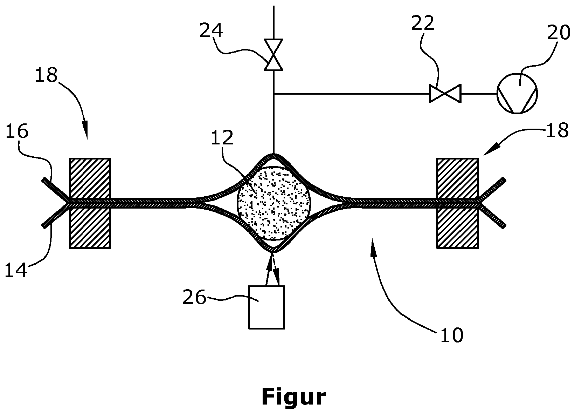

Im Folgenden wird anhand der Figur ein Ausführungsbeispiel der Erfindung näher erläutert:
Die Figur zeigt eine Messanordnung zur Anwendung des erfindungsgemäßen Verfahrens.

Die Messanordnung besteht aus einer Folienkammer 10, in die ein nicht formstarrer Prüfling 12 in Form einer Lebensmittelverpackung eingebracht ist. Nach Einbringen des Prüflings 12 in die Folienkammer 10 wird die Folienkammer geschlossen, indem die beiden die Folienkammer bildenden Folien 14, 16 mit dazwischenliegendem Prüfling 12 aufeinander gelegt werden und in den Randbereichen durch eine Klemmvorrichtung 18 luftdicht aufeinander gepresst werden.

Anschließend wird die Folienkammer von der Vakuumpumpe 20, die über ein Ventil 22 mit dem Inneren der Folienkammer verbunden ist, evakuiert. Hierbei wird das Ventil 22 geöffnet und ein ebenfalls mit dem Inneren der Folienkammer 10 verbundenes Belüftungsventil 24 zur Atmosphäre hin verschlossen. Während in dem Prüfling 12 weiterhin atmosphärischer Druck herrscht, wird der Druck in dem den Prüfling 12 umgebenden Volumen innerhalb der Folienkammer 10 um mindestens 1000 mbar abgesenkt. Nach Absenken des Drucks in der Folienkammer wird auch das Ventil 22 geschlossen und die Pumpe 20 deaktiviert.

Mit dem Abstandssensor 26 wird durch laseroptische Messung der Entfernung zwischen dem Abstandssensor 26 und der Folie der Folienkammer 10 die Position der Folie 14 beobachtet. Eine Veränderung der räumlichen Position der Folie 14 wird als reduzierter Abstand zu dem Abstandssensor 26 erfasst und als Hinweis auf ein Leck verwendet.

Eine Leckrate von beispielsweise 10⁻² mbar·l/s bewirkt in einem Verpackungsvolumen von 1 Liter bei 1000 mbar Gasfüllung eine Volumenänderung von 10⁻² cm³/s. Für ein würfelförmiges Verpackungsvolumen von 1 Liter (Querschnitt 100 cm²) bedeutet dies eine Abnahme der Dicke von 1 pm/s. Relative Abstandsänderungsraten von 1 µm/s sind insbesondere mit optischen Methoden nachweisbar. Die Änderung des Verpackungsvolumens wird auf die Folienoberfläche der Folienprüfkammer übertragen.

Das erfindungsgemäße Verfahren ist unabhängig von der Gasart innerhalb des Prüflings und innerhalb der Folienkammer. Undichtigkeiten an der Folienkammer beeinflussen die Prüfmethode nur vernachlässigbar. Groblecks werden aufgrund sehr starker und schneller Positionsänderungen der Folienoberfläche schnell erkannt. Es werden nur wenige Ventile benötigt, nämlich zum Pumpenanschluss und zur Belüftung.

## Patentansprüche

1. Verfahren zur Lecksuche an einem nicht formstarren Prüfling (12), mit den Schritten:
Einbringen des Prüflings (12) in eine Folienkammer (10) in Form einer Prüfkammer mit flexiblen Wänden, die ihre Form in Abhängigkeit von der Differenz zwischen dem Druck innerhalb der Folienkammer und dem Umgebungsdruck verändern,
Anschmiegen der flexiblen Wände an den Prüfling (12) durch Absenken des Drucks in der Folienkammer (10) außerhalb des Prüflings (12),
Beobachten der Folie der Folienkammer,
Detektieren einer räumlichen Veränderung der Folie durch eine Positionsveränderung der Folie oder eine Volumenveränderung der Folienkammer und
Detektion eines Lecks im Prüfling (12) anhand der räumlichen Veränderung der Folie (14,16) der Folienkammer (10).

2. Verfahren nach Anspruch 1, **dadurch gekennzeichnet, dass** die verschlossene Folienkammer (10) nach Einbringen des Prüflings während der Detektion eine Leckrate aufweist, die mindestens genauso hoch oder mindestens doppelt so hoch ist wie die Leckrate des Prüflings (12).

3. Verfahren nach Anspruch 1 oder 2, **dadurch gekennzeichnet, dass** die räumliche Veränderung der Folie (14,16) durch laseroptisches Messen der Position der Folienoberfläche erfolgt.

4. Verfahren nach Anspruch 3, **dadurch gekennzeichnet, dass** die laseroptische Messung durch Messen der Änderung der Ablenkung eines auf die Folienoberfläche gerichteten Lasers erfolgt.

5. Verfahren nach Anspruch 1 oder 2, **dadurch gekennzeichnet, dass** die räumliche Veränderung der Folie durch Messen der Kapazitätsänderung einer metallisierten Folienoberfläche erfasst wird.

6. Verfahren nach Anspruch 1 oder 2, **dadurch gekennzeichnet, dass** die räumliche Veränderung der Folie mit Hilfe einer Vorrichtung erfasst wird, die eine Berührung oder das Ausbleiben einer Berührung mit der Folienoberfläche anzeigt.

7. Verfahren nach einem der vorhergehenden Ansprüche, **dadurch gekennzeichnet, dass** die Leckrate des durch das Leck im Prüfling (12) hindurchtretenden Gases in Abhängigkeit von der gemessenen räumlichen Veränderung der Folie (14,16) berechnet wird.

8. Verfahren nach einem der vorhergehenden Ansprüche, **dadurch gekennzeichnet, dass** der Druck in der Folienkammer (10) auf einen Druck reduziert wird, der um mindestens 500 mbar und vorzugsweise um mindestens 950 mbar geringer ist als der Druck innerhalb des Prüflings (12).

9. Verfahren nach Anspruch 8, **dadurch gekennzeichnet, dass** die Reduzierung des Drucks innerhalb der Folienkammer (10) unter Beibehaltung atmosphärischen Drucks in dem Prüfling (12) erfolgt.

## Claims

1. A method for detecting leaks on a non-rigid test specimen (12), comprising the steps of:
introducing the test specimen (12) into a film chamber (10) in the form of a test chamber having flexible walls, which changes its form in dependence of the difference between the pressure inside the film chamber and the ambient pressure,
forging the flexible walls to the test specimen (12) by lowering the pressure inside the film chamber (10) outside the test specimen (12),
observing the film of the film chamber,
detecting a spatial change in the film by a position change of the film or a volume change of the film chamber, and
detecting a leak in the test specimen (12) on the basis of a spatial change in the film (14, 15) of the film chamber (10).

2. The method according to claim 1, **characterized in that**, after the introduction of the test specimen, the closed film chamber (10) shows a leakage rate during detection that is at least as high or at least twice as high as the leakage rate of the test specimen (12).

3. The method according to claim 1 or 2, **characterized in that** the spatial change in the film (14, 16) is measured by laser-optical measurement of the position of the film surface.

4. The method according to claim 3, **characterized in that** the laser-optical measurement is performed by measuring the change in deflection of a laser directed onto the film surface.

5. The method according to claim 1 or 2, **characterized in that** the spatial change in the film is detected by measuring the capacitance change of a metalized film surface.

6. The method according to claim 1 or 2, **characterized in that** the spatial change in the film is detected by means of a device that indicates contact or the absence of contact with the film surface.

7. The method according to any one of the preceding claims, **characterized in that** the leakage rate of the gas escaping through the leak in the test specimen (12) is calculated in dependence of the measured spatial change in the film (14, 16).

8. The method according to any one of the preceding claims, **characterized in that** the pressure inside the film chamber (10) is reduced to a pressure that is lower than the pressure inside the test specimen (12) by at least 500 mbar and preferably by at least 950 mbar.

9. The method according to claim 8, **characterized in that** the reduction of the pressure inside the film chamber (10) is performed while maintaining the atmospheric pressure inside the test specimen (12).

## Revendications

1. Procédé de recherche de fuite au niveau d'un objet à tester non rigide (12), comprenant les étapes consistant à :
introduire l'échantillon (12) dans une chambre à film (10) sous la forme d'une chambre de test présentant des parois flexibles dont la forme se modifie en fonction de la différence entre la pression à l'intérieur de la chambre à film et la pression ambiante,
faire adhérer les parois flexibles à l'échantillon (12) grâce à un abaissement de la pression dans la chambre à film (10) à l'extérieur de l'échantillon (12), observer le film de la chambre à film,
détecter une modification spatiale du film grâce à une modification de position du film ou à une modification de volume de la chambre à film, et
détecter une fuite dans l'échantillon (12) à l'aide de la modification spatiale du film (14, 16) de la chambre à film (10).

2. Procédé selon la revendication 1, **caractérisé en ce que** la chambre à film (10) fermée, après l'introduction de l'objet à tester et pendant la détection, présente un taux de fuite qui est au moins aussi élevé ou au moins deux fois plus élevé que le taux de fuite de l'objet à tester (12).

3. Procédé selon la revendication 1 ou 2, **caractérisé en ce que** la modification spatiale du film (14, 16) est réalisée grâce à une mesure optique par laser de la position de la surface du film.

4. Procédé selon la revendication 3, **caractérisé en ce que** la mesure optique par laser est réalisée en mesurant la modification de la déviation d'un laser dirigé sur la surface du film.

5. Procédé selon la revendication 1 ou 2, **caractérisé en ce que** la modification spatiale du film est enregistrée en mesurant la modification de capacité électrique d'une surface de film métallisée.

6. Procédé selon la revendication 1 ou 2, **caractérisé en ce que** la modification spatiale du film est enregistrée à l'aide d'un dispositif qui indique un contact ou une absence de contact avec la surface du film.

7. Procédé selon l'une des revendications précédentes, **caractérisé en ce que** le taux de fuite du gaz passant par la fuite dans l'objet à tester (12) est calculé en fonction de la modification spatiale mesurée du film (14, 16).

8. Procédé selon l'une des revendications précédentes, **caractérisé en ce que** la pression dans la chambre à film (10) est réduite à une pression inférieure d'au moins 500 mbar, et de manière préférée inférieure d'au moins 950 mbar, par rapport à la pression à l'intérieur de l'objet à tester (12).

9. Procédé selon la revendication 8, **caractérisé en ce que** la réduction de la pression à l'intérieur de la chambre à film (10) intervient en maintenant la pression atmosphérique dans l'objet à tester (12).
